# EUROPÄISCHE PATENTANMELDUNG

(11) **EP 2 564 994 A1**
(43) Veröffentlichungstag der Anmeldung: **06.03.2013**
(21) Anmeldenummer: 11179816.1
(22) Anmeldetag: 02.09.2011
(51) Int. Cl.: B25J 15/04, B25J 19/00, F16J 15/06

(54) **Kuppeleinrichtung zum automatisierten Ankuppeln eines Werkzeughalters an einen Werkzeugaufnehmer**

(71) Anmelder: Siemens VAI Metals Technologies GmbH, 4031 Linz (AT)
(72) Erfinder: Ebner, Helmut, 4331 Naarn i.M. (AT); Scheidegger, Roger, 4300 St.Valentin (AT)
(74) Vertreter: Maier, Daniel Oliver

(57) **Zusammenfassung**

Die Erfindung betrifft eine Kuppeleinrichtung, die einen Werkzeughalter (1) und einen Werkzeugaufnehmer (21) umfasst. Die Aufgabe der Erfindung ist es, eine robuste Kuppeleinrichtung zu schaffen, bei der der Werkzeughalter (1) automatisiert an den Werkzeugaufnehmer (21) gekuppelt werden kann und dabei sowohl elektrische oder optische Verbindungen als auch Fluidverbindungen automatisch gekuppelt werden. Diese Aufgabe wird durch den Werkzeughalter (1) gelöst, wobei der Bund (6) und die Kontaktfläche (7) von zumindest einer ersten Öffnung (8) und zumindest einer zweiten Öffnung (10) durchdrungen werden, und wobei der ersten Öffnung (8) eine elektrische oder optische Verbindung (9) zugeordnet und die zweite Öffnung (10) als Fluidführung ausgebildet ist.

## Beschreibung

### Gebiet der Technik

Die vorliegende Erfindung betrifft einen Werkzeughalter, einen Werkzeugaufnehmer, eine Kuppeleinrichtung, umfassend den Werkzeughalter und den Werkzeugaufnehmer, die zum automatisierten Ankuppeln des Werkzeughalters an den Werkzeugaufnehmer geeignet ist, sowie die Verwendung der Kuppeleinrichtung zum Halten eines Werkzeugs mit einem Manipulator, wobei der Manipulator mittels des Werkzeugs automatisierte Tätigkeiten in einer Hüttenwerksanlage durchführt.

Einerseits betrifft die Erfindung einen Werkzeughalter zum automatisierten Ankuppeln an einen Werkzeugaufnehmer, umfassend
- einen Spannkopf zum Verspannen des Werkzeughalters mit dem Werkzeugaufnehmer;
- einen konusförmigen Kegelschaft zur Zentrierung des Werkzeughalters gegenüber dem Werkzeugaufnehmer, wobei sich der Kegelschaft vom Spannkopf in Richtung der Längsachse des Werkzeughalters erstreckt; und
- einen Bund mit einer ebenen Kontaktfläche, die auf der dem Kegelschaft zugewandten Seite angeordnet ist, und der Bund den Kegelschaft (zumindest teilweise) überragt.

Weiters betrifft die Erfindung einen Werkzeugaufnehmer an den ein Werkzeughalter automatisiert ankuppelbar ist, umfassend
- eine Kegelhülse mit einer ebenen Stirnfläche und einem konusförmigen Innenkegel, wobei sich der Innenkegel in Richtung der Längsachse des Werkzeugaufnehmers erstreckt;
- eine Spanneinrichtung zum automatisierten Verspannen des Werkzeughalters mit dem Werkzeugaufnehmer; und
- einen Aufnahmeflansch zum Verbinden des

### Werkzeugaufnehmers mit einem Manipulator.

Außerdem betrifft die Erfindung die Verwendung einer Kuppeleinrichtung, umfassend den Werkzeughalter und den Werkzeugaufnehmer, zum Halten eines Werkzeugs mit einem Manipulator, wobei der Manipulator mittels des Werkzeugs eine automatisierte Tätigkeit in einer Hüttenwerksanlage, insbesondere auf der Gießbühne einer Stranggießmaschine, durchführt.

### Stand der Technik

Kuppeleinrichtungen, umfassend einen Werkzeughalter zum Halten eines Werkzeugs und einen Werkzeugaufnehmer, an den der Werkzeughalter ankuppelbar ist, sind im Werkzeugmaschinenbau als auch in der Robotertechnik grundsätzlich bekannt. Aus der unveröffentlichten europäischen Patentanmeldung mit der Anmeldenummer 11152707.3 ist ein Werkzeug zum Aufbrennen eines metallurgischen Gefäßes und ein Werkzeughalter bekannt, wobei das Werkzeug mittels des Werkzeughalters und des nicht dargestellten Werkzeugaufnehmers mit einem Roboter verbunden werden kann. Generell ist der Roboter mit dem Werkzeugaufnehmer und der Werkzeughalter mit dem Werkzeug verbunden, wobei der Werkzeugaufnehmer über die Werkzeughalter unterschiedliche Werkzeuge aufnehmen kann. Da das Werkzeug rasch an den Roboter an- bzw. abkuppelbar sein soll und beim Aufbrennen sowohl elektrische Signale als auch Gase dem Werkzeug zuzuführen sind, sind für elektrische Signale und für Gase geeignete Kupplungen zwischen Werkzeughalter und -aufnehmer vorzusehen. Da in einer hüttenmännischen Anlage raue Umgebungsbedingungen vorherrschen (bspw. eine staubige Atmosphäre, eine erhöhte Temperatur und auch Schlacke- bzw. Stahlspritzer nicht ausgeschlossen werden können), müssen diese Kupplungen besonders robust ausgeführt sein.

Aus der W02009/097956 ist ein Werkzeughalter bekannt, umfassend
- einen Spannkopf 13 zum Verspannen des Werkzeughalters mit dem Werkzeugaufnehmer;
- einen konusförmigen Kegelschaft 11 zur Zentrierung des Werkzeughalters gegenüber einem Werkzeugaufnehmer, wobei sich der Kegelschaft 11 vom Spannkopf 13 in Richtung der Längsachse des Werkzeughalters erstreckt; und
- einen Bund 9 mit einer ebenen Fläche, die auf der dem Kegelschaft zugewandten Seite angeordnet ist, und der Bund 9 den Kegelschaft überragt.

Weiters ist aus der W02009/097956 ein Werkzeugaufnehmer bekannt, umfassend
- eine Kegelhülse 16 mit einem konusförmigen Innenkegel, wobei sich der Innenkegel in Richtung der Längsachse des Werkzeugaufnehmers erstreckt;
- eine Spanneinrichtung 2c zum automatisierten Verspannen des Werkzeughalters mit dem Werkzeugaufnehmer; und
- einen Aufnahmeflansch 4,5,6 zum Verbinden des Werkzeugaufnehmers mit einem Manipulator.

Gemäß der W02009/097956 werden Fluide vom Werkzeugaufnehmer über die Kegelhülse und den Kegelschaft zum Werkzeughalter, und vom Werkzeughalter zum Werkzeug übertragen, wobei zwischen dem Kegelschaft und der Kegelhülse Dichtungen zur Abdichtung der Fluide eingesetzt werden. Da die Zuverlässigkeit der Dichtungen bei einer unvermeidbaren Verschmutzung des Kegelschafts bzw. der Kegelhülse drastisch abnimmt, müssen die Dichtungen häufig erneuert werden. Somit ist aber die Kuppeleinrichtung für den rauen Betrieb in einer hüttenmännischen Anlage zu wenig robust. Robuste Kupplungen zur Führung von gasförmigen oder flüssigen Medien sind zwar bspw. aus der Mobilhydraulik grundsätzlich bekannt, allerdings können Fluide damit nicht automatisiert an- bzw. abgekuppelt werden. Aber auch elektrische Signale müssen vom bzw. zum Werkzeug beispielsweise weiterhin über Militärische Rundsteckverbindungen (sogenannte "MIL Stecker", z.B. http://www.boersig.com) übertragen werden, sodass auch diese Signale nicht automatisiert an- bzw. abgekuppelt werden können.

Somit müssen aber die elektrischen Signale und Fluide nach dem Stand der Technik weiterhin manuell gekuppelt werden, wodurch die Rüstzeit verlängert wird.

### Zusammenfassung der Erfindung

Die Aufgabe der Erfindung ist es, die Nachteile des Stands der Technik zu überwinden und eine robuste Kuppeleinrichtung, umfassend einen Werkzeughalter und einen Werkzeugaufnehmer, zu schaffen. Der Werkzeughalter soll automatisiert an den Werkzeugaufnehmer kuppelbar sein und dabei sollen sowohl elektrische oder optische Verbindungen als auch Fluidverbindungen automatisch gekuppelt werden.

Diese Aufgabe wird durch den eingangs genannten Werkzeughalter gelöst,
- wobei der Bund und die Kontaktfläche von zumindest einer ersten Öffnung und zumindest einer zweiten Öffnung durchdrungen werden, und
- wobei der ersten Öffnung eine elektrische oder optische Verbindung zugeordnet und die zweite Öffnung als Fluidführung ausgebildet ist.

Dabei wird der Werkzeughalter durch den Kegelschaft, der einen Außenkonus aufweist, mit dem Werkzeugaufnehmer, der einen Innenkonus aufweist, verspannt. Der Spannkopf, der beispielsweise als ein pilzförmiger Kopf ausgebildet ist, wird durch eine axiale Bewegung einer Spanneinrichtung, die vorzugsweise innerhalb des Werkzeugaufnehmers angeordnet ist und beispielsweise ein Greifwerkzeug zum Greifen des Spannkopfs und eine Verschiebeeinrichtung zum Verschieben des Spannkopfs umfasst, verschoben, sodass der Werkzeughalter mit dem Werkzeugaufnehmer verspannt wird. Über den Kegelschaft und den Innenkegel im Werkzeugaufnehmer erfolgt eine Zentrierung des Werkzeughalters gegenüber dem Werkzeugaufnehmer. Der Bund, der in Richtung der Längsachse des Werkzeughalters dem Kegelschaft nachgelagert ist, und die Kontaktfläche werden von zumindest einer ersten Öffnung und zumindest einer zweiten Öffnung durchdrungen, wobei in der ersten Öffnung eine elektrische oder optische Verbindung (z.B. ein elektrischer Kontakt bzw. ein Kontaktstift)angeordnet und die zweite Öffnung als Fluidführung ausgebildet ist. Somit wird ein elektrisches Signal durch die elektrische Verbindung - beispielsweise ein elektrischer Kontakt bzw. ein Kontaktstift - in den Werkzeughalter eingeleitet, wobei auf der dem Kegelschaft abgewandten Seite des Bunds das Signal zum Werkzeug geleitet wird. Selbstverständlich ist die Erfindung keineswegs auf elektrische Signale beschränkt; vielmehr können z.B. auch optische Signale durch Lichtleiter zum Werkzeughalter und vom Werkzeughalter zum Werkzeug geleitet werden. In diesem Fall ist die elektrische Verbindung lediglich als optische Verbindung, z.B. als Optokoppler, auszubilden. Ein Fluid, d.h. ein flüssiges oder gasförmiges Medium (z.B. Luft, O₂, Ar, N₂ oder ein Hydraulikmedium), wird durch die zweite Öffnung, die als Fluidführung ausgebildet ist, in den Werkzeughalter eingeleitet, wobei auf der dem Kegelschaft abgewandten Seite des Bunds das Fluid z.B. über eine Verschraubung und ein Rohr oder einen Schlauch zum Werkzeug geleitet wird. Sowohl die erste und die zweite Öffnung können einfacherweise z.B. als Durchgangsbohrung ausgeführt sein.

Insbesondere bei mehreren ersten und zweiten Öffnungen, die auf einem Lochkreis unter Winkelversatz angeordnet sind, ist es vorteilhaft, wenn der Werkzeugaufnehmer einen Führungsbolzen zur Festlegung der Winkellage des Werkzeughalters gegenüber dem Werkzeugaufnehmer aufweist, wobei vorzugsweise der Führungsbolzen normal zur Längsachse ausgerichtet ist und aus dem Kegelschaft hervorragt. Durch den Führungsbolzen und eine Führungsnut im Werkzeugaufnehmer wird eine definierte Winkellage zwischen dem Werkzeughalter und dem Werkzeugaufnehmer eingestellt.

Eine einfache Konstruktion kann erzielt werden, wenn mehrere erste Öffnungen und/oder mehrere zweite Öffnungen auf einem Lochkreis, d.h. unter Winkelversatz auf einem Durchmesser, angeordnet sind.

Eine besonders einfache Konstruktion für zumindest ein elektrisches oder optisches Signal und ein Fluid ist möglich, wenn sich eine erste Öffnung entlang eines ersten Lochkreises und sich eine zweite Öffnung entlang eines zweiten

Lochkreises, wobei die Lockreise unterschiedliche Durchmesser aufweisen, erstreckt. In diesem Fall ist die elektrische oder optische Verbindung als eine ringförmige Verbindungszone ausgebildet. In diesem Fall sind die ersten und zweiten Öffnungen als ringförmige Nuten ausgebildet, sodass es irrelevant ist, welche Winkellage der Werkzeughalter gegenüber dem Werkzeugaufnehmer aufweist.

Um einen sicheren Kontakt auch im Falle eines größeren Abstands (beispielsweise aufgrund einer Verschmutzung) zwischen dem Werkzeughalter und dem Werkzeugaufnehmer sicherzustellen, ist es vorteilhaft, dass die elektrische Verbindung als ein gefederter Federkontaktstift ausgebildet ist. Federkontaktstifte sind dem Fachmann bekannt, siehe z.B. http://www.leitec.info.

Um einen direkten Kontakt zwischen dem Bund und dem Kontaktstift zu vermeiden, ist es vorteilhaft, dass der Kontaktstift über zumindest eine Hülse in der ersten Öffnung angeordnet ist.

Um die Abdichtung des Fluids sicherzustellen, ist es vorteilhaft, wenn der zweiten Öffnung ein Dichtelement zugeordnet und das Dichtelement konzentrisch zur zweiten Öffnung angeordnet ist. Im Allgemeinen ist es günstig, wenn das Dichtelement im Bereich der Flanschfläche, d.h. auf der Flanschfläche selbst bzw. der Flanschfläche unmittelbar vor- bzw. nachgelagert, angeordnet ist.

Um das Herausfallen des Dichtelements zu verhindern ist es günstig, wenn das Dichtelement eine Dichtung und einen Haltering umfasst, die Dichtung und der Haltering einen einzigen Bauteil ausbilden und vorzugsweise der Haltering zumindest eine Haltenase, die der inneren und/oder der äußeren Mantelfläche des Halterings zugeordnet ist, umfasst.

Um eine Beschädigung bzw. eine Verschmutzung des Werkzeugaufnehmers zu verhindern, ist es vorteilhaft, dass der Werkzeughalter eine Abdeckung zum Schutz des Kegelschafts aufweist, wobei sich die Abdeckung vom Halteflansch in Richtung des Kegelschafts erstreckt. Hierbei ist es jedoch keinesfalls notwendig, dass die Abdeckung parallel zum Kegelschaft angeordnet ist. Um den gesamten Kegelschaft zu schützen, erstreckt sich die Abdeckung vorzugsweise zumindest vom Halteflansch bis zum Spannkopf.

Die oben genannte Aufgabe wird ebenfalls durch einen Werkzeugaufnehmer der eingangs genannten Art gelöst,
- wobei die Kegelhülse und die Stirnfläche von zumindest einer ersten Öffnung und zumindest einer zweiten Öffnung durchdrungen werden; und
- wobei der ersten Öffnung ein elektrischer oder optischer Leiter zugeordnet und die zweite Öffnung als eine Fluidführung ausgebildet ist.

Dabei weist der Werkzeugaufnehmer eine Kegelhülse mit einer ebenen, vorzugsweise normal zur Längsachse des Werkzeugaufnehmers angeordneten, Stirnfläche und einen konusförmigen Innenkegel auf, wobei sich der Innenkegel, vorzugsweise von der Stirnfläche, in Richtung der Längsachse des Werkzeugaufnehmers erstreckt, und der Kegelhülse nachfolgend eine Spanneinrichtung zum automatisierten Verspannen des Werkzeughalters mit dem Werkzeugaufnehmer und ein Aufnahmeflansch zum Verbinden des Werkzeugaufnehmers mit einem Manipulator angeordnet ist. Vorzugsweise ist der elektrische Leiter gegenüber der Kegelhülse z.B. mittels eines Sicherungsrings gesichert.

Es ist vorteilhaft, wenn der Werkzeugaufnehmer eine Führungsnut zur Festlegung der Winkellage des Werkzeughalters gegenüber dem Werkzeugaufnehmer aufweist. Der Führungsbolzen und die Führungsnut stellen eine definierte Winkellage zwischen dem Werkzeughalter und dem Werkzeugaufnehmer sicher.

Weiters ist es günstig, wenn der elektrische Leiter über eine Hülse in der ersten Öffnung angeordnet ist, wobei vorzugsweise die Hülse als ein elektrischer Isolator, insbesondere aus Teflon, ausgeführt ist.

Zweckmäßigerweise umfasst die Spanneinrichtung ein Greifwerkzeug und eine Verschiebeeinrichtung; eine derartige Spanneinrichtung ist dem Fachmann z.B. aus der WO 2009/097956 A2 bekannt.

Nach einer vorteilhaften Ausführungsform ist die Verschiebeeinrichtung als ein fluidbeaufschlagter Zylinder (z.B. ein Pneumatik- oder Hydraulikzylinder) oder ein Elektromagnet ausgebildet.

Die Kuppeleinrichtung, umfassend einen Werkzeughalter und einen Werkzeugaufnehmer, zum automatisierten Ankuppeln des Werkzeughalters an den Werkzeugaufnehmer, ist dadurch gekennzeichnet,
- dass ein elektrisches oder optisches Signal von einem Manipulator zur Kegelhülse, von der Kegelhülse durch den elektrischen oder optischen Leiter zur elektrischen oder optischen Verbindung, und von der elektrischen oder optischen Verbindung zum Werkzeug geführt werden kann; und
- dass ein Fluid vom Manipulator zur Kegelhülse, von der Kegelhülse durch die Fluidführung zur Kontaktfläche, und von der Kontaktfläche durch die zweite Öffnung zum Werkzeug geführt werden kann.

Durch das Verspannen von Werkzeugaufnehmer und Werkzeughalter wird zwischen der elektrischen oder optischen Verbindung und dem elektrischen oder optischen Leiter sowie zwischen dem Dichtelement und der Stirnfläche eine Flächenpressung aufgebaut, sodass das elektrische oder optische Signal ohne Unterbrechung und das Fluid druckdicht durch die Kuppeleinrichtung geleitet werden können. Durch die Flächenpressung kann diese Funktion selbst bei Verschmutzungen aufrechterhalten werden.

Da wie eingangs bemerkt in einer Hüttenwerksanlage Verschmutzungen nicht ausgeschlossen werden können und somit Werkzeugaufnehmer, Werkzeughalter und Kuppeleinrichtungen nach dem Stand der Technik nicht zufriedenstellend funktionieren, ist es vorteilhaft, die Kuppeleinrichtung zum Halten eines Werkzeugs mit einem Manipulator zu verwenden, wobei der Manipulator mittels des Werkzeugs automatisierte Tätigkeiten in einer Hüttenwerksanlage durchführt. Dies gilt besonders dann, wenn der Manipulator eine automatisierte Tätigkeit auf der Gießbühne einer Stranggießmaschine durchführt.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1 eine perspektivische Darstellung einer Kuppeleinrichtung im eingekuppelten Zustand
Fig 2 ein Aufriss zu Fig 1
Fig 3 eine perspektivische Darstellung der Kuppeleinrichtung nach Fig 1 im ausgekuppelten Zustand
Fig 4 ein Aufriss zu Fig 3
Fig 5 eine Schnittdarstellung zu Fig 2 entlang der Schnittlinie B-B
Fig 6 eine vergrößerte Darstellung zu Fig 5
Fig 7 eine Schnittdarstellung zu Fig 2
Fig 8 eine vergrößerte Darstellung zu Fig 7
Fig 9 eine Schnittdarstellung zu Fig 4
Fig 10 ein weiterer Aufriss zu Fig 1
Fig 11 eine perspektivische Darstellung des Werkzeugaufnehmers nach Fig 1
Fig 12a und 12b je eine perspektivische Darstellung des Werkzeughalters nach Fig 1
Fig 13 eine geschnittene Darstellung eines Dichtelements

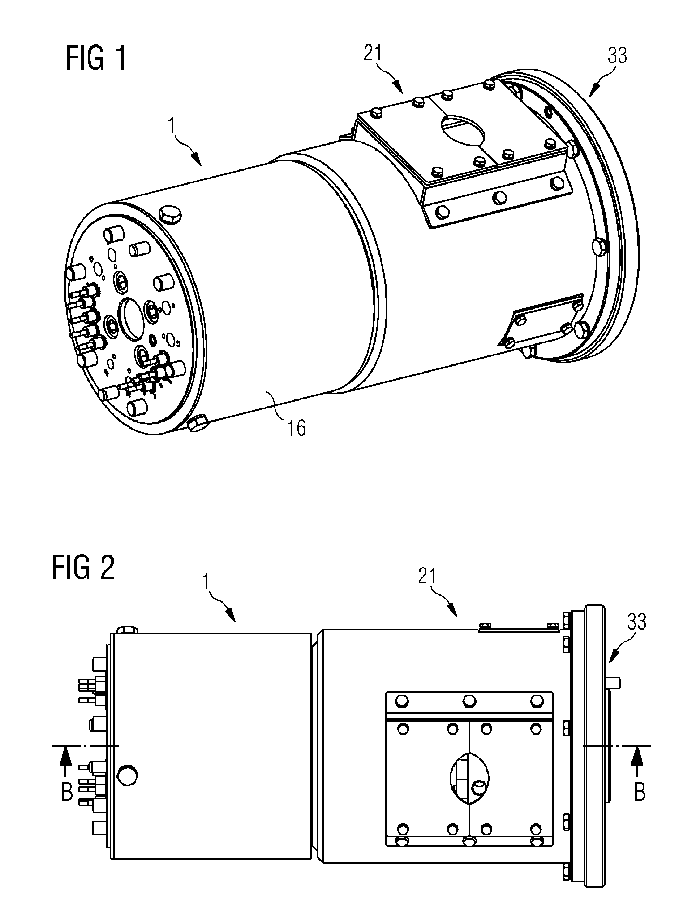

Fig 1 zeigt eine perspektivische Darstellung einer Kuppeleinrichtung, die einen Werkzeughalter 1 und einen Werkzeugaufnehmer 21 umfasst. Ein nicht dargestellter Manipulator, z.B. ein 6-Achsen-Industrieroboter, ist über einen Aufnahmeflansch 33 mit dem Werkzeughalter 21 verbunden. An den Werkzeughalter 21 ist automatisiert der Werkzeughalter 1 an- bzw. abkuppelbar, wobei der Werkzeughalter 21 ein Werkzeug, z.B. zum Aufbrennen eines metallurgischen Gefäßes, tragen kann, und der Manipulator mittels des Werkzeugs eine automatisierte Tätigkeit in einer hüttenmännischen Anlage (auch als Hüttenwerk bzw. Hüttenwerksanlage bezeichnet) durchführen kann.

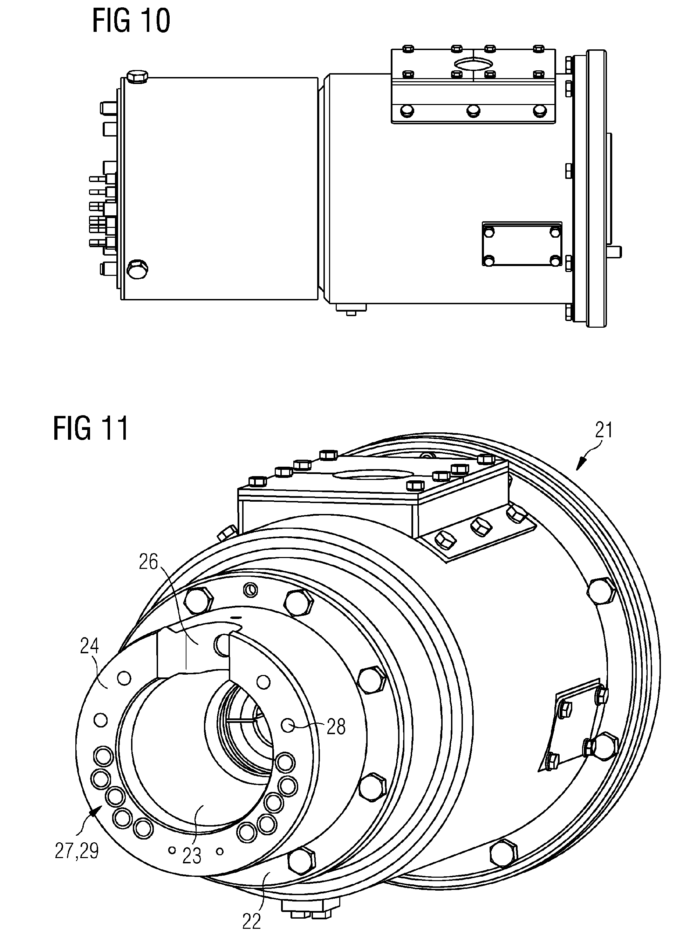

Der Werkzeugzeughalter 1 und der Werkzeugaufnehmer 21 der Fig 1 sind in den Fig 2 und 10 noch je einem Aufriss dargestellt, wobei die Kuppeleinrichtung nach Fig 10 eine Drehung um die Längsachse 3 des Werkzeughalters 1 gegenüber der Fig 2 aufweist.

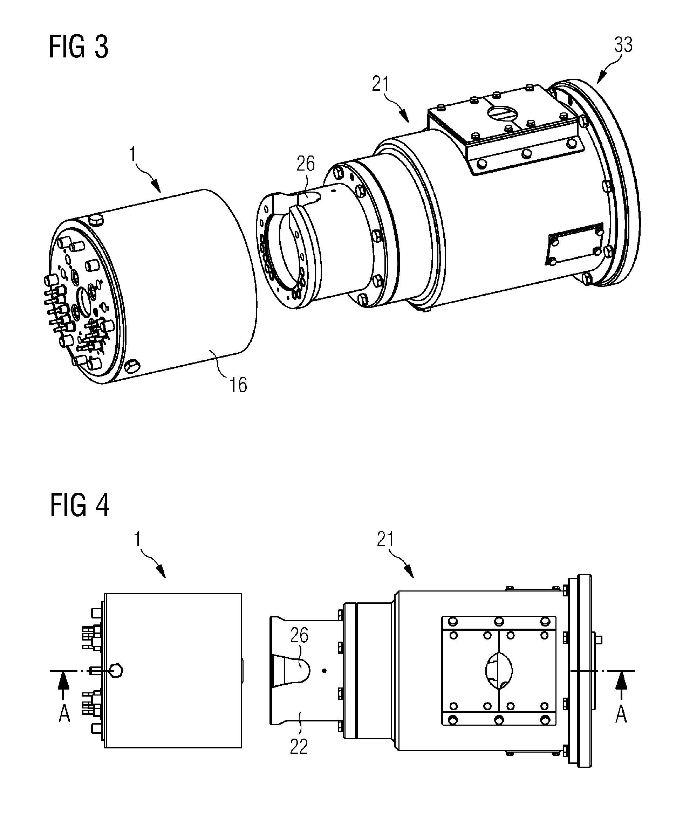

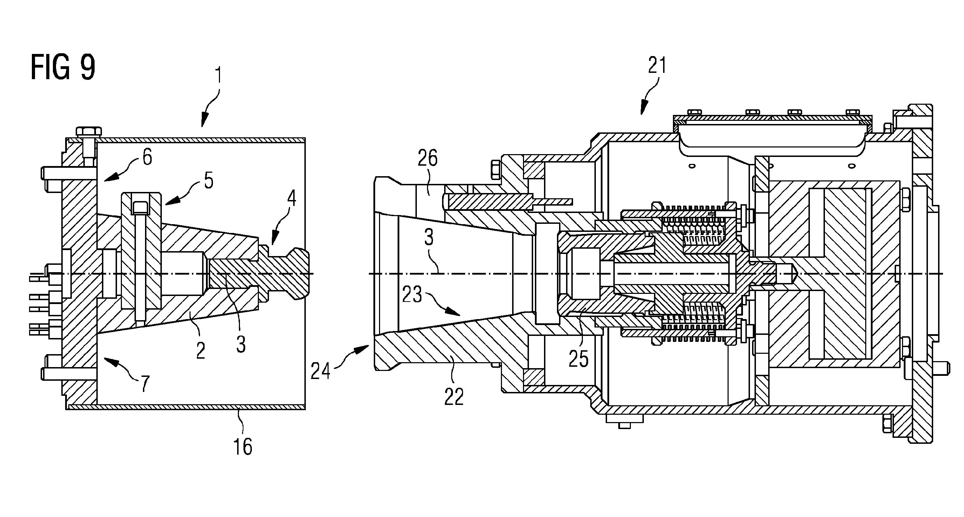

In der Fig 3 ist wiederum der Werkzeughalter 1 und der Werkzeugaufnehmer 21 dargestellt. Dabei ist zu erkennen, dass der Kegelschaft des Werkzeughalters 1 (siehe auch Fig 9, Bezugszeichen 2) durch eine Abdeckung 16 vor Beschädigungen geschützt ist. Weiters weist der Werkzeugaufnehmer 21 eine Führungsnut 26 auf, die zusammen mit einem Führungsbolzen (Fig 9, Bezugszeichen 5) eine definierte Winkellage zwischen dem Werkzeughalter 1 und dem Werkzeugaufnehmer 21 sicherstellt.

In der Fig 4 ist ein Aufriss zu Fig 3 dargestellt.

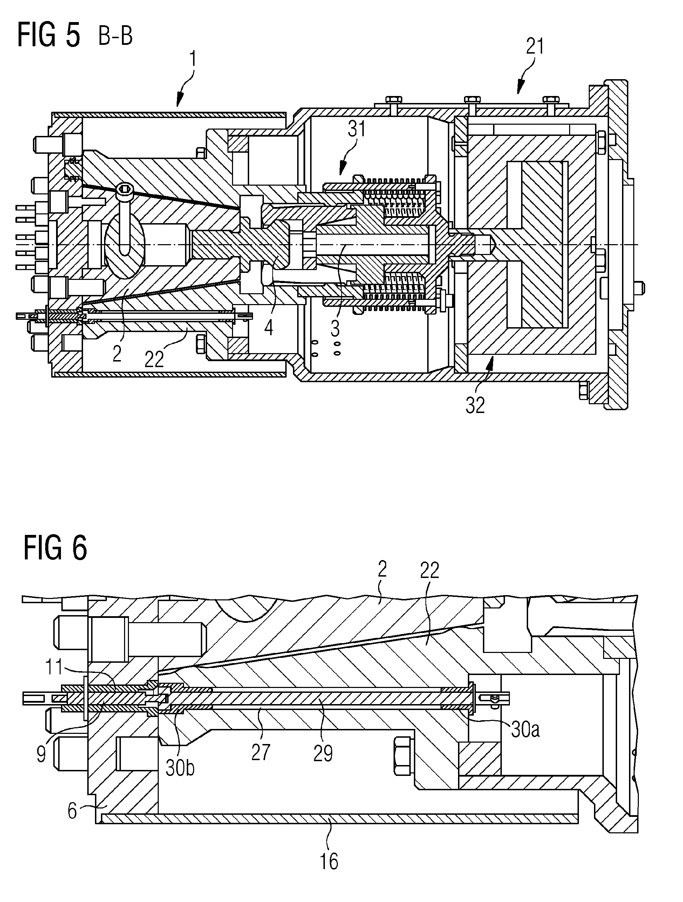

Die Fig 5 zeigt eine Schnittdarstellung der Fig 2 entlang der Schnittlinie B-B, wobei sich die Kuppeleinrichtung im eingekuppelten Zustand befindet, konkret dass der pilzförmige Spannkopf 4 des Werkzeughalters 1 mittels einer Spanneinrichtung 25, umfassend ein Greifwerkzeug 31 und eine Verschiebeeinrichtung 32, mit dem Werkzeugaufnehmer 21 verspannt ist. Im eingekuppelten Zustand wird der Kegelschaft 2 gegen den Innenkegel der Kegelhülse 22 verspannt, wobei die Kontaktfläche (Fig 9, Bezugszeichen 7) des Bunds (Fig 9, Bezugszeichen 6), die auf der dem Kegelschaft 2 zugewandt Seite angeordnet ist, nicht zwingend die Stirnfläche (Fig 9: Bezugszeichen 24) der Kegelhülse 22 berührt. Die Kuppeleinrichtung wird über den Kegelschaft 2 und den Innenkegel 23 der Kegelhülse 22 zentriert.

In Fig 6 ist die Leitung eines elektrischen Signals vom Werkzeugaufnehmer 21 zum Werkzeughalter 1 näher dargestellt. Das elektrische Signal wird über eine Kontaktklemme in den elektrischen Leiter 29 eingeführt, der in einer ersten Öffnung 27 mit rundem Querschnitt in der Kegelhülse 22 angeordnet ist. Der elektrische Leiter 29 ist durch einen Wellendichtring in axialer Richtung gesichert und wird durch zwei Hülsen 30a,30b gegenüber der Kegelhülse 22 elektrisch isoliert. Die Hülsen sind aus einem widerstandsfähigen, elektrisch nicht leitenden Material, beispielsweise Teflon hergestellt. Der elektrische Leiter 29 steht im Bereich der Stirnfläche 24 bzw. der Kontaktfläche 7 mit einer elektrischen Verbindung 9, die als Federkontaktstift ausgebildet ist, im elektrischen Kontakt, wobei der Federkontaktstift in einer Hülse 11 angeordnet ist, die sich wiederum in einer ersten Öffnung 27 mit rundem Querschnitt des Bunds 6 befindet. Das elektrische Signal wird auf der dem Kegelschaft abgewandten Seite wiederum bei einer Kontaktklemme abgenommen und dem nicht darstellten Werkzeug zugeführt. Eine besonders einfache Konstruktion ergibt sich, wenn die Stirnfläche 24 und die Kontaktfläche 7 in einer Normalebene zur Längsachse 3 angeordnet sind. Grundsätzlich sind jedoch auch andere Winkel zwischen den Flächen 7,24 und der Längsachse 3 möglich.

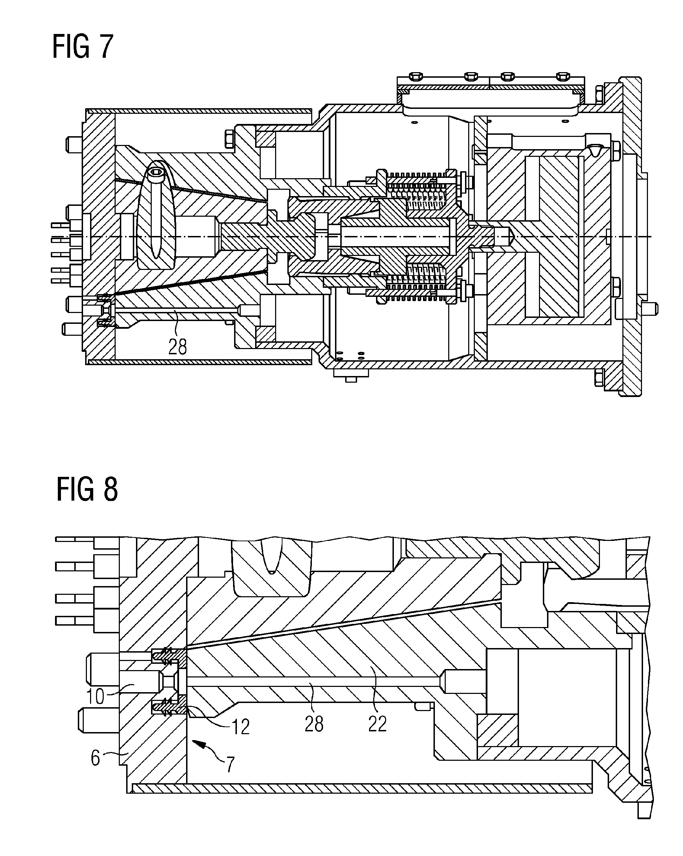

Fig 7 zeigt eine weitere Schnittdarstellung der Kuppeleinrichtung im eingekuppelten Zustand, wobei die Schnittführung so gewählt wurde, dass die Führung eines Fluids durch die Kuppeleinrichtung sichtbar wird.

In Fig 8 ist die Fluidführung vergrößert dargestellt. Das Fluid wird über eine nicht dargestellte Verschraubung in eine zweite Öffnung 28 mit rundem Querschnitt der Kegelhülse 22 eingeführt und zur Stirnfläche 24 geleitet. Dort wird die Stirnfläche 7 gegen ein Dichtelement 12 gepresst, sodass das Fluid druckdicht von der Kegelhülse 22 des Werkzeugaufnehmers 21 in eine zweite Öffnung 10 des Werkzeughalters 1 geleitet wird. Die zweite Öffnung 10 weist auf der dem Kegelschaft abgewandten Seite wiederum eine nicht dargestellt Verschraubung auf, sodass das Fluid vom Werkzeughalter 1 zum Werkzeug geführt werden kann. Selbstverständlich ist die Fluidführung sowohl für Flüssigkeiten und Gase geeignet; außerdem können sowohl Fluid vom Werkzeugaufnehmer 21 zum Werkzeughalter 1 und umgekehrt geführt werden.

In Fig 9 sind die Einzelteile des Werkzeugaufnehmers 21 und des Werkzeughalters 1 näher dargestellt. Um den Materialverbrauch bei der Fertigung des Werkzeughalters 1 zu reduzieren, weist der Kegelschaft 2 eine Öffnung auf, in die der Führungsbolzen 5 mittels eines Befestigungsmittels eingeschraubt werden kann.

Fig 11 zeigt eine perspektivische Darstellung des Werkzeugaufnehmers 21. Die Kegelhülse 22 und die Stirnfläche 24 werden von sechs zweiten Öffnungen 28 durchdrungen, die auf einem Lochkreis angeordnet sind. Außerdem weist die Kegelhülse 22 zehn erste Öffnungen 27 mit je einem elektrischen Leiter 29 auf, wobei - um möglichst viele erste Öffnungen 27 auf der Stirnfläche 24 unterzubringen - die Öffnungen auf zwei Lochkreisen mit unterschiedlichen Durchmessern angeordnet sind.

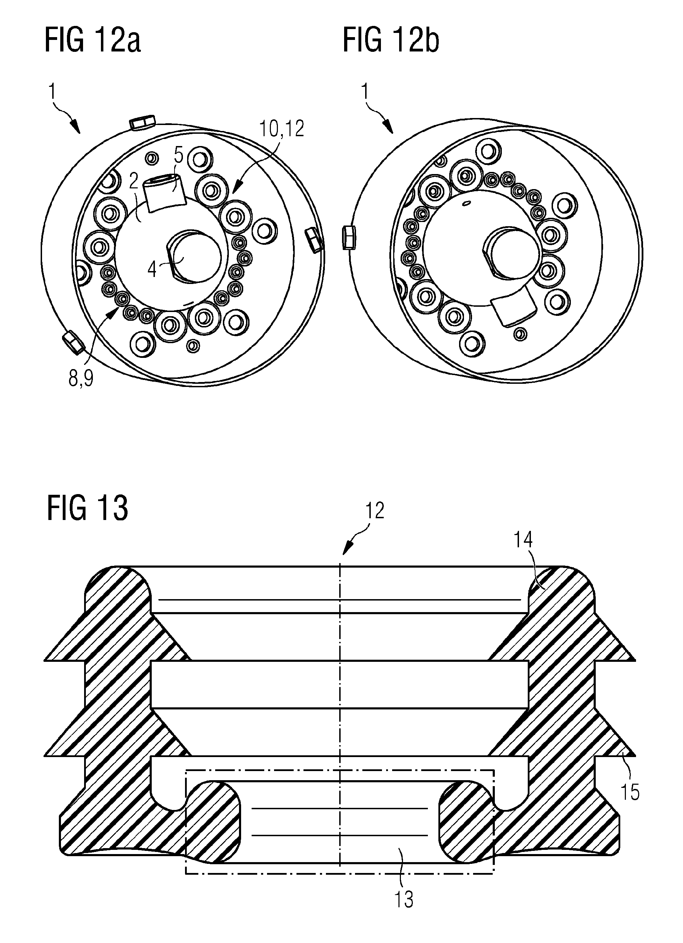

Die Fig 12a und 12b zeigen den Werkzeughalter 1. Wiederum sind die sechs zweiten Öffnungen 10 mit je einem Dichtelement 12 sowie zehn ersten Öffnungen 8 mit je einem Kontaktstift 9 dargestellt.

Fig 13 zeigt das Dichtelement 12 näher. Das Dichtelement 12 weist eine Dichtung 13, die ähnlich einem O-Ring als statische Dichtung ausgebildet ist, und einen Haltering 14 auf, wobei die Dichtung 13 und der Haltering 14 einen einzigen Bauteil ausbilden. Um ein Herausfallen des Dichtelements 12 aus dem Bund 6 zu verhindern, weist der Haltering 14 mehrere Haltenasen 15 auf. Vorzugsweise besteht das Dichtelement aus einem chemisch resistenten Material, z.B. aus Fluorkautschuk FKM oder Teflon PTFE mit einer Härte von 80±5 Shore A.

Alternativ zur Anordnung der ersten 8, 27 und zweiten Öffnungen 10, 28 gemäß den Figuren 1 bis 12 sind bei einer nicht dargestellten Ausführungsform alle ersten Öffnungen und alle zweiten Öffnungen auf unterschiedlichen Lochkreisen angeordnet. Gemäß dieser Ausführungsform erstreckt sich die erste Öffnung entlang eines ersten Lochkreises und die zweite Öffnung entlang eines zweiten Lochkreises, wobei der ersten Öffnung eine ringförmige Verbindungszone zugeordnet und die zweite Öffnung als ringförmige Fluidführung ausgebildet ist. Durch die ringförmige Anordnung der elektrischen Kontakte und der Fluidführungen ist keine definierte Winkellage zwischen dem Werkzeughalter 1 und dem Werkzeugaufnehmer 21 erforderlich, sodass Führungsbolzen und -nuten entfallen können. Diese Ausführungsform zeichnet sich durch eine besonders einfache Konstruktion aus, allerdings ist die Anzahl der übertragbaren Fluide und bzw. der elektrischen Signale gegenüber der Ausführungsform nach den Figuren 1 bis 12 reduziert.

### Bezugszeichenliste

- 1: Werkzeughalter
- 2: Kegelschaft
- 3: Längsachse
- 4: Spannkopf
- 5: Führungsbolzen
- 6: Bund
- 7: Kontaktfläche
- 8: erste Öffnung
- 9: Kontakt
- 10: zweite Öffnung
- 11: Hülse
- 12: Dichtelement
- 13: Dichtung
- 14: Haltering
- 15: Haltenase
- 16: Abdeckung

- 21: Werkzeugaufnehmer
- 22: Kegelhülse
- 23: Innenkegel
- 24: Stirnfläche
- 25: Spanneinrichtung
- 26: Führungsnut
- 27: erste Öffnung
- 28: zweite Öffnung
- 29: elektrischer Leiter
- 30a,30b: Hülse
- 31: Greifwerkzeug
- 32: Verschiebeeinrichtung
- 33: Aufnahmeflansch

## Patentansprüche

1. Werkzeughalter (1) zum automatisierten Ankuppeln an einen Werkzeugaufnehmer (21), umfassend
- einen Spannkopf (4) zum Verspannen des Werkzeughalters (1) mit dem Werkzeugaufnehmer (21);
- einen konusförmigen Kegelschaft (2) zur Zentrierung des Werkzeughalters (1) gegenüber dem Werkzeugaufnehmer (21), wobei sich der Kegelschaft (2) vom Spannkopf in Richtung der Längsachse (3) des Werkzeughalters (1) erstreckt;
- einen Bund (6) mit einer ebenen Kontaktfläche (7), die auf der dem Kegelschaft (2) zugewandten Seite angeordnet ist, und der Bund (6) den Kegelschaft (2) überragt;
**dadurch gekennzeichnet,**
**dass** der Bund (6) und die Kontaktfläche (7) von zumindest einer ersten Öffnung (8) und zumindest einer zweiten Öffnung (9) durchdrungen werden;
**dass** der ersten Öffnung (8) eine elektrische oder optische Verbindung (9) zugeordnet und die zweite Öffnung (10) als Fluidführung ausgebildet ist.

2. Werkzeughalter (1) nach Anspruch 1, **dadurch gekennzeichnet, dass** ein Führungsbolzen (5) zur Festlegung der Winkellage des Werkzeughalters (1) gegenüber dem Werkzeugaufnehmer (21) vorgesehen ist, wobei vorzugsweise der Führungsbolzen (5) normal zur Längsachse (3) ausgerichtet ist und aus dem Kegelschaft (2) hervorragt.

3. Werkzeughalter (1) nach Anspruch 2, **dadurch gekennzeichnet, dass** mehrere erste Öffnungen (8) und/oder mehrere zweite Öffnungen (10) auf einem Lochkreis angeordnet sind.

4. Werkzeughalter (1) nach Anspruch 1, **dadurch gekennzeichnet, dass** die elektrische Verbindung (9) als ein gefederter Federkontaktstift ausgebildet ist, der vorzugsweise über zumindest eine Hülse (11) in der ersten Öffnung (8) angeordnet ist.

5. Werkzeughalter (1) nach Anspruch 1, **dadurch gekennzeichnet, dass** der zweiten Öffnung (10) ein Dichtelement (12) zugeordnet und das Dichtelement (12) konzentrisch zur zweiten Öffnung (10) angeordnet ist.

6. Werkzeughalter nach Anspruch 5, **dadurch gekennzeichnet, dass** das Dichtelement (12) eine Dichtung (13) und einen Haltering (14) umfasst, die Dichtung (13) und der Haltering (14) einen einzigen Bauteil ausbilden und vorzugsweise der Haltering (14) zumindest eine Haltenase (15), die der inneren und/oder der äußeren Mantelfläche des Halterings zugeordnet ist, umfasst.

7. Werkzeughalter (1) nach Anspruch 1, **dadurch gekennzeichnet, dass** der Werkzeughalter (1) eine Abdeckung (16) zum Schutz des Kegelschafts (2) aufweist, wobei sich die Abdeckung (16) vom Bund (6) in Richtung des Kegelschafts (2) erstreckt.

8. Werkzeugaufnehmer (21) an den ein Werkzeughalter (1) automatisiert ankuppelbar ist, umfassend
- eine Kegelhülse (22) mit einer ebenen Stirnfläche (24) und einem konusförmigen Innenkegel (23), wobei sich der Innenkegel (23) in Richtung der Längsachse (3) des Werkzeugaufnehmers (21) erstreckt;
- eine Spanneinrichtung (25) zum automatisierten Verspannen des Werkzeughalters (1) mit dem Werkzeugaufnehmer (21); und
- einen Aufnahmeflansch (33) zum Verbinden des Werkzeugaufnehmers (21) mit einem Manipulator;
**dadurch gekennzeichnet,**
**dass** die Kegelhülse (22) und die Stirnfläche (24) von zumindest einer ersten Öffnung (27) und zumindest einer zweiten Öffnung (28) durchdrungen werden;
**dass** der ersten Öffnung (27) ein elektrischer oder optischer Leiter (29) zugeordnet und die zweite Öffnung (28) als eine Fluidführung ausgebildet ist.

9. Werkzeugaufnehmer nach Anspruch 8, d**adurch gekennzeichnet, dass** der Werkzeugaufnehmer (21) eine Führungsnut (26) zur Festlegung der Winkellage des Werkzeughalters (1) gegenüber dem Werkzeugaufnehmer (21) aufweist.

10. Werkzeugaufnehmer (21) nach Anspruch 8, **dadurch gekennzeichnet, dass** der elektrische Leiter (29) über eine Hülse (30a,30b) in der ersten Öffnung (27) angeordnet ist, wobei vorzugsweise die Hülse (30a,30b) als ein elektrischer Isolator, insbesondere aus Teflon, ausgeführt ist.

11. Werkzeugaufnehmer (21) nach Anspruch 8, **dadurch gekennzeichnet, dass** die Spanneinrichtung (25) ein Greifwerkzeug (31) und eine Verschiebeeinrichtung (32) umfasst.

12. Werkzeugaufnehmer (21) nach Anspruch 11, **dadurch gekennzeichnet, dass** die Verschiebeeinrichtung (32) als ein fluidbeaufschlagter Zylinder oder ein Elektromagnet ausgebildet ist.

13. Kuppeleinrichtung, umfassend einen Werkzeughalter (1) nach einem der Ansprüche 1 bis 7 und einen Werkzeugaufnehmer (21) nach einem der Ansprüche 8 bis 12, zum automatisierten Ankuppeln des Werkzeughalters an den Werkzeugaufnehmer, **dadurch gekennzeichnet,**
**dass** ein elektrisches oder optisches Signal von einem Manipulator zur Kegelhülse (22), von der Kegelhülse (22) durch den elektrischen oder optischen Leiter (29) zur elektrischen oder optischen Verbindung (9), und von der elektrischen oder optischen Verbindung (9) zum Werkzeug geführt werden kann; und
**dass** ein Fluid vom Manipulator zur Kegelhülse (22), von der Kegelhülse (22) durch die Fluidführung zum Dichtelement (12), und vom Dichtelement (12) durch die zweite Öffnung (10) zum Werkzeug geführt werden kann.

14. Verwendung der Kuppeleinrichtung nach Anspruch 13 zum Halten eines Werkzeugs mit einem Manipulator, wobei der Manipulator mittels des Werkzeugs eine automatisierte Tätigkeit in einer Hüttenwerksanlage durchführt.

15. Verwendung nach Anspruch 14, **dadurch gekennzeichnet, dass** der Manipulator die automatisierte Tätigkeit auf der Gießbühne einer Stranggießmaschine durchführt.
